Europäisches Patentamt

European Patent Office

Office européen des brevets

(11) Publication number: **0 664 200 A1**

## EUROPEAN PATENT APPLICATION
### published in accordance with Art. 158(3) EPC

(21) Application number: **94917148.2**

(22) Date of filing: **02.06.94**

(51) Int. Cl.6: **B29C 47/68**

(86) International application number:
**PCT/JP94/00896**

(87) International publication number:
**WO 94/27803 (08.12.94 94/27)**

(30) Priority: **02.06.93 JP 157979/93**

(43) Date of publication of application:
**26.07.95 Bulletin 95/30**

(84) Designated Contracting States:
**DE FR GB**

(71) Applicant: **THE FURUKAWA ELECTRIC CO., LTD.**
**6-1, Marunouchi 2-chome**
**Chiyoda-ku**
**Tokyo 100 (JP)**

(72) Inventor: **SUZUKI, Hiroaki**
**4-4-15, Sugano**
**Ichikawa-shi**
**Chiba-ken 272 (JP)**
Inventor: **SAKATA, Kazumasa Green Fellows**
**Furukawa No. 417**

**3-4, Tatsumidaihigashi**
**Ichihara-shi**
**Chiba-ken 290 (JP)**
Inventor: **TSUTA, Tomoyoshi**
**3-9-5, Higashiyawata**
**Hiratsuka-shi**
**Kanagawa-ken 254 (JP)**
Inventor: **MATSUMOTO, Tetsuo**
**Furukawadenkoh No. 2 Ryo**
**3-5, Tatsumidaihigashi**
**Ichihara-shi**
**Chiba-ken 290 (JP)**

(74) Representative: **MEISSNER, BOLTE & PARTNER**
**Patentanwälte**
**Postfach 86 06 24**
**D-81633 München (DE)**

(54) **RUBBER/PLASTIC EXTRUDING SCREEN MESH AND EXTRUDING METHOD USING THE SAME.**

(57) A screen mesh mounted in an extruding machine for removing foreign matters in an extruding material when it is extruded, said screen mesh providing a rubber/plastic extruding screen mesh comprising a wire rod formed of an Ni-Ti alloy. With this screen mesh, superior mechanical properties, corrosion-resistance properties and wear-resistance properties can be obtained, and even with a small outside diameter of a wire rod and a small diameter for passage, it is possible to remove minute foreign matters in an extruding material over a long period of time in a stable fashion. An extrusion method is provided for extruding an extruding material using an extruding machine in which a screen mesh comprising Ni-Ti alloy wire rods is disposed forwardly of an extruding screw in an extruding direction, thereby making it possible to produce a molded product including no mirco foreign matters and withstanding usage under high voltage.

F I G. 2

Technical Field

The present invention relates invariably to a rubber/plastic extrusion screen mesh capable of invariably removing minute foreign matters in a material for extrusion, such as rubber or plastic, and an extrusion method using the screen mesh.

Background Art

Recently, a rubber/plastic insulation power cable (to be abbreviated as power cable hereinafter) is used in many cases under a considerably high voltage of about 275 to 500 kV. In the case where the power cable is used under a high voltage, the generation of electrical tree or the dielectric breakdown may occur due to the concentration of an electric field, which is caused by projections formed in the interface between an insulating layer and a semiconductive layer, from the foreign matters present in the insulating layer or foreign matters present in the semiconductive layer, serving as nuclei. Therefore, in order to manufacture a power cable for a higher voltage and to increase the reliability of a power cable, the foreign matters must be eliminated appropriately when the layers are extruded.

Meanwhile, an ultra-high voltage cable of about 275 kV is presently becoming popular as a long distance underground line, and a prefabricated joint is used as one of the connection methods for such a cable. Such a prefabricated joint consists of an insulating unit called stress cone and made of a rubber and an insulating unit made of an epoxy resin, for the purpose of insulation. In this case also, foreign matters in the rubber of the stress cone serve to cause a dielectric breakdown under a high voltage. Therefore, these foreign matters must be eliminated before a stress cone is formed.

The above-mentioned foreign matters can be removed with a screen mesh made of soft stainless steel wires made by annealing a stainless steel such as SUS 304 or SUS 316. As described, in a cable used under a high voltage, fine foreign matters cause the concentration of an electric field, and therefore these fine foreign matters must be eliminated. For eliminating minute foreign matters, the size of the through-diameter of the screen mesh used must be reduced. For example, in order to satisfy insulation properties of a level presently required, the type of screen mesh for removing the foreign matters in the material of an insulating layer should be changed, that is, 200 to 400 mesh (diameter of wire: 50 to 30 $\mu$m, diameter of through-hole: 77 to 34 $\mu$m), which is presently used, to 500 mesh (diameter of wire: 25 $\mu$m, diameter of through-hole: 26 $\mu$m), or 635-mesh (diameter of wire: 20 $\mu$m, diameter of through-hole: 20 $\mu$m). Further, in order to maintain the smoothness of a semiconductive layer at a high level, the type of a screen mesh for removing the foreign matters in the material of an insulating layer should be changed, that is, 150 to 250 mesh (diameter of wire: 60 to 40 $\mu$m, diameter of through-hole: 110 to 62 $\mu$m), which is presently used, to 350 to 500 mesh (diameter of wire: 30 to 25 $\mu$m, diameter of through-hole: 43 to 26 $\mu$m). Furthermore, with regard to a screen mesh for removing the foreign matters in the material used for a stress cone of a prefabricated joint, 200 mesh (diameter of wire: 50 $\mu$m, diameter of through-hole: 77 $\mu$m), which is presently used, should be changed to 200 to 400 mesh (diameter of wire: 50 to 30 $\mu$m, diameter of through-hole: 77 to 34 $\mu$m).

This screen mesh is, when used, usually placed on a reinforcement screen mesh having a relatively large through-hole size, and mounted to a breaker plate in the form of a screen assembly. However, when the screen mesh is made of a soft stainless steel as mentioned above, the wire which constitutes a screen mesh having a relatively small through-hole diameter, is plastic deformed due to the pressure of the extrusion material as the extrusion is performed. In the worst case, the wire may be broken.

The extrusion material to be extruded or molded, for example, rubber or plastic, contains various types of additives mixed thereinto, for example, a filler such as carbon black. Consequently, when an extrusion material containing such additives at a high ratio is extruded through the screen mash, the wire of the screen mesh is abraded and made thin by the additives, particularly, carbon black, and in some cases, the wire is broken.

In the case where the material to be extruded is an ethylene-vinyl acetate copolymer (EVA) based compound, the wire of the screen mesh may be corrode by acid generated from EVA itself or the additives. This promotes the above-described abrasion, and makes the wire even thinner. In some cases, the wire may be broken. As a result, fine foreign matters included in the extrusion material cannot be eliminated before the extrusion is performed.

Not only that, if the wire of the screen mesh is broken, broken pieces of the wire are mixed into the material extruded and create a new foreign matter. The pieces of the foreign matter are metal. Therefore, in the case where the extrusion material is used for an electric power cable, the metal pieces may cause a serious accident.

Further, for a high reliability in, particularly, a high-voltage power transmission, long-length power cables should be used in order to minimize the number of connecting sections, which are factors in dielectric breakdown. In order to achieve this, the extrusion of a semiconductive layer or an insulating layer must be carried out continuously for a prolonged time.

However, with regard to a screen mesh made of an ordinary stainless steel wire, the life of the wire up to the time of wear or breakage of the wire is short and the continuous extrusion time is limited. For this reason, it is difficult to increase the length of a power cable.

Disclosure of Invention

An object of the present invention is to provide an extrusion screen mesh having good mechanical properties, a good anti-corrosion property and a good anti-abrasion property, and capable of eliminating minute foreign matters invariably for a long time, and an extrusion method using such a screen mesh.

This object can be achieved by an extrusion screen mesh, provided in an extruder, for eliminating foreign matters contained in an extrusion material while the material is being extruded, and made of a wire of an Ni-Ti alloy.

Another object of the present invention is to provide an extrusion method capable of eliminating foreign matters from an extrusion material when, for example, a power cable used under a high electric field is manufactured, since the foreign matters cause a degradation in the cable properties, or affects the characteristics of the cable.

This object can be achieved by an extrusion method of extruding a material by use of an extruder having a screen mesh made of a Ni-Ti alloy-made wire, in front of the extrusion screw with regard to the extruding direction.

Brief Description of Drawings

FIG. 1 is a schematic diagram showing that section of a rubber/plastic extruder having an extrusion screen mesh of the present invention, where the screen mesh is provided;

FIG. 2 is a schematic diagram showing the structure of the extrusion screen mesh of the present invention;

FIG. 3 is an explanatory diagram showing a mold product (power cable) manufactured with the extruder having the extrusion screen mesh of the present invention; and

FIG. 4 is an explanatory diagram showing a prefabricated joint in which the mold product obtained by the extrusion method of the present invention, is applied to the stress cone.

Best Mode of Carrying Out the Invention

The extrusion screen mesh of the present invention is characterized in that it is made of a wire of an Ni-Ti alloy.

The Ni content in the Ni-Ti alloy should preferably be set within a range of 48.0 to 51.5 atomic%. This is because, if the Ni content is less than 48.0 atomic%, the mechanical properties, particularly, the elongation, of the screen mesh are insufficient, whereas the Ni content exceeds 51.5 atomic%, the workability of the Ni-Ti alloy declines, making it impossible to obtain a thin wire material. The Ni content of the Ni-Ti alloy should preferably be in a range of 50.6 to 51.5 atomic%, in particular.

According to the present invention, the Ni-Ti alloy may contain at least one additive element of Fe, Co, Cr, V, Cu, Pd, Mn and Al. With an addition of these elements to the Ni-Ti alloy, the mechanical properties of the screen mesh obtained are enhanced, and further, when some types of the additive elements are used, the anti-corrosion property is improved. In the case where additive elements are added to the Ni-Ti alloy, the Ni content should preferably be in a range of 49.5 to 51.5 atomic%. The reason why the lower limit of the Ni content is different from the above-mentioned one is that additive elements are substituted by Ni and/or Ti when added to the alloy. The content of the additive elements should preferably be 1.8 atomic% or less in total. This is because, if the content of the additive elements exceeds 1.8 atomic% in total, the workability of the Ni-Ti alloy declines poor. It should be noted that the Ni-Ti alloy inevitably contains unremovable impurities.

In the present invention, the through-hole diameter of the screen mesh should preferably be 80 $\mu$m or less. This is because, if the through-hole diameter exceeds 80 $\mu$m, the elimination of the foreign matters which affects the characteristics of a power cable comes to be uneliminatable as described above. The material of the reinforcement screen mesh which constitutes the screen assembly is not limited to an Ni-Ti

4

alloy, but can be appropriately selected, such as stainless steel.

Examples of the extrusion material used in the present invention are rubbers such as ethylene-propylene rubber, ethylene-propylene-diene rubber, chloroprene rubber, silicone rubber, acrylic rubber, fluoroelastomer and natural rubber; olefin-based polymers such as polyethylene, polypropylene, chlorinated polyethylene, ethylene-vinylacetate copolymer, ethylene-acrylic acid copolymer, ethylene-methacrylic acid copolymer, ethylene-acrylic methyl copolymer and ethylene-acrylic ethyl copolymer; plastic materials such as polyamide, polyvinyl chloride, tetrafluoroethylene-perfluoroalkylvinylether, tetrafluoroethylene-hexafluoropropylene copolymer and saturated polyester; and compounds of these.

Examples of the mold product obtained by the extrusion method of the present invention are an internal semiconductive layer, an external semiconductive layer, and an insulating layer of a rubber/plastic insulation power cable, and extruded film. Further, extrusion products obtained by the extrusion method of the present invention are appropriate for extended products used for connecting sections of a power cable, or materials of electric insulating sections in a prefabricated joint.

Embodiments of the present invention will now be described specifically with reference to drawings.

(Embodiment 1)

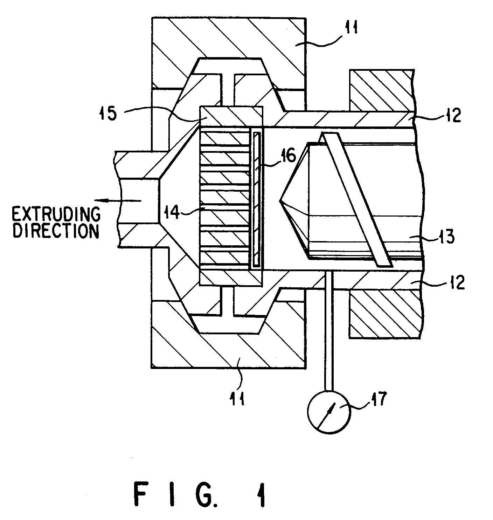

FIG. 1 is a schematic diagram showing that section of a rubber/plastic extruder having an extrusion screen mesh of the present invention, where the screen mesh is provided. FIG. 1 shows the main body of an extruder 11. In the main body of the extruder 11, a cylinder 12 is provided. In the cylinder 12, a screw 13 is inserted. In front of the tip end of the screw in the cylinder 12, a breaker plate 15 including a plurality of pouring sections 14 is provided. This breaker plate 15 is designed to inhibit a spiral flow of the extrusion material caused by the screw 13 and transfer the material to the cross head. A screen assembly is mounted to the screw side of the breaker plate 15. Further, a manometer 17 for measuring the pressure of the extrusion material is mounted to the cylinder 12.

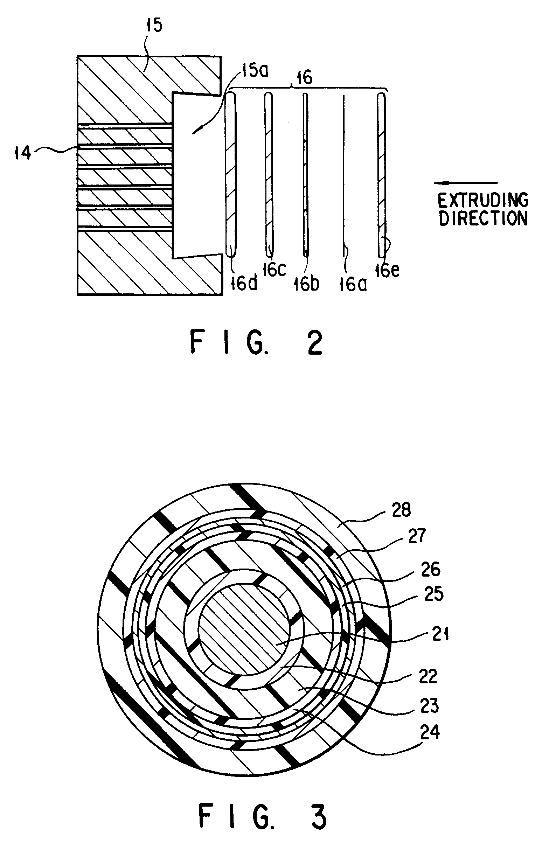

The screen assembly 16 consists of a screen mesh 16a made of an Ni-Ti alloy, and reinforcement screen meshes 16b to 16e arranged on both sides of the screen mesh 16a, as shown in FIG. 2. The screen assembly 16 is placed on the breaker plate 15 as the reinforcement screen meshes 16b to 16e and the screen mesh 16a are set into a recess 15a of the breaker plate 15 successively in the order, for example, as shown in FIG. 2. Since the screen mesh 16a is made very thin, it may be formed larger than the reinforcement screen mesh and the excessive section of the screen mesh 16a with regard to the reinforcement screen mesh may be folded in so as to cover a proximate reinforcement screen mesh 16e to be integrated therewith.

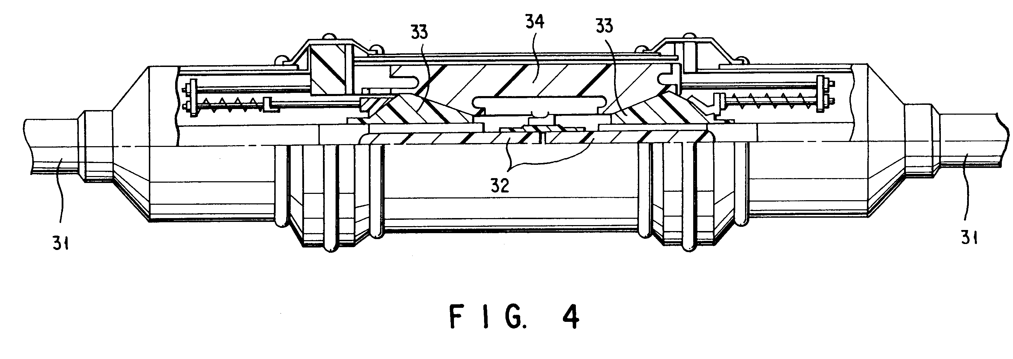

Using of an extruder having the above structure, an internal semiconductive layer 22, an insulating layer 23 and an external semiconductive layer 24 of a power cable shown in FIG. 3 are extruded such as to cover the outer circumference of a conductor 21. This figure also shows a semiconductive cloth tape 25, a metal shielding layer 26, a holding tape 27 and a sheath layer 28, all of which are formed after the above three layers are extruded. What is shown in FIG. 4 is a general structure of a power cable used particularly under a high voltage.

The extruder for forming an insulating layer, used here was the type in which the diameter of the cylinder was 150mm$\phi$, and L (length of screw) / D (diameter of cylinder) = 22. The extruder for forming an internal semiconductive layer, used here was the type in which the diameter of the cylinder was 90mm$\phi$, and L/D = 22. Further, the screen assembly 16 had the structure in which the screen mesh 16a (300 mesh for a semiconductive layer and 500 mesh for an insulating layer) made of a material having a composition listed in TABLE 1 below, and the reinforcement screen mesh 16b (100 mesh), the mesh 16c (60 mesh), the mesh 16d (40 mesh) and the mesh 16e (60 mesh), which have through-hole diameters of 40 mesh (hole diameter: 350 $\mu$m), 60 mesh (hole diameter: 240 $\mu$m) and 100 mesh (hole diameter: 150 $\mu$m) which were made of stainless steel wires having outer diameters of 290 $\mu$m, 180 $\mu$m and 100 $\mu$m, respectively, were set into the recess 15a of the breaker plate 15 in the order shown in FIG. 2.

The extrusion material for the insulating layer 23, used here was low-density polyethylene (LDPE) having a melt index of 3, where as the material for the semiconductive layers 22 and 24 was of the type prepared by adding 60 parts by weight of carbon black to 100 parts by weight of EVA. The conditions for the extrusion were as follows. The temperature of the resin to be extruded was set to 130°C. The extrusion amount for the insulating layer 23 was set to that obtained for 100 hours at a rate of 90 kg/hour, the amount for the internal semiconductive layer 22 was set that obtained for 100 hours at a rate of 18 kg/hour, and the amount for the external semiconductive layer 24 was set that obtained for 100 hours at a rate of 20 kg/hour.

The declining amount of the screen mesh 16a in wire diameter, after the extrusion, was observed under a microscope for several cases. The results were summarized in TABLE 2 below. The case where no

5

declining of the employed screen mesh in wire diameter was observed was labeled "GOOD," whereas the case where a wire was broken due to erosion and/or plastic deformation, etc. of the wire of the screen mesh by the extrusion was labeled "BROKEN SECTION OBSERVED". As the comparative examples, wires SUS 304 and SUS 316 were used to prepare screen meshes 16a, and the extrusion was carried out under the same condition as above. The results were also incorporated in TABLE 2.

TABLE 1

| (Compositions of Alloys) | | | | | | | | |
|---|---|---|---|---|---|---|---|---|
| | No. | Ni | Fe | V | Cr | Co | Al | Ti |
| Examples | 1 | 51.0 | | | | | | balance |
| | 2 | 51.0 | 0.5 | 0.2 | | | | " |
| | 3 | 50.4 | | | 0.6 | | | " |
| | 4 | 50.5 | | | | 0.6 | | " |
| | 5 | 50.0 | 0.5 | | | 0.3 | | " |
| | 6 | 50.0 | | 0.2 | | | 0.2 | " |
| | 7 | 49.5 | 0.8 | | 0.4 | | 0.4 | " |
| | 8 | 50.0 | 0.5 | 0.2 | | | | " |
| | 9 | 50.6 | | | | | | " |
| Comparative Examples | 10 | SUS 304 | | | | | | |
| | 11 | SUS 316 | | | | | | |

TABLE 2

| (Declining amount in terms of wire diameter after extrusion) | | | | |
|---|---|---|---|---|
| | No. | Internal semiconducting layer | Insulating layer | External semiconducting layer |
| Examples | 1 | 3 μm | "GOOD" | 4 μm |
| | 2 | 3 μm | " | 4 μm |
| | 3 | 5 μm | " | 6 μm |
| | 4 | 5 μm | " | 6 μm |
| | 5 | 5 μm | " | 6 μm |
| | 6 | 5 μm | " | 6 μm |
| | 7 | 4 μm | " | 5 μm |
| | 8 | 4 μm | " | 4 μm |
| | 9 | 3 μm | " | 4 μm |
| Comparative Examples | 10 | BROKEN SECTION OBSERVED | BROKEN SECTION OBSERVED | BROKEN SECTION OBSERVED |
| | 11 | " | " | " |

As is clear from TABLE 2, the screen mesh of the present invention exhibited an extremely low thinning amount in wire diameter as compared to SUS series alloys in the case where the size of the through-hole for forming an insulating layer was as fine as 500 mesh or thereabout and the case where an extrusion material having a high viscosity, such as the material for the semiconductive layer in which carbon black is mixed thereinto at a high ratio, was continuously extruded for a prolonged time. Thus, in the manufacture of a power cable of this example, where the extrusion is continuously performed, the removal of foreign matters, which causes an increase in the cable characteristics, can be carried out continuously for a prolonged time. Consequently, the quality of the power cable can be maintained at a high level in its entire length, and therefore the present invention can contribute to an increase in the limit of the length of a cable. This is because not only the Ni-Ti alloy of the present invention has a high anticorrosion property and a high antierosion property with respect to a particular extrusion material, but also the breakage of a wire, caused by the pressure from the extrusion material can be prevented with excellent elastic property of the wire.

In contrast, the screen mesh made of a stainless steel wire exhibited an increased through-hole diameter as a result of the breakage of the wire caused by the pressure applied thereto while the extrusion material is allowed to pass through, and/or the abrasion caused by the carbon black added to the semiconductive layer material while the material is being extruded. As a result, the removal of foreign matters, which is the object of the present invention, could not be sufficiently achieved.

(Embodiment 2)

With use of the extruder used in Embodiment 1, the material for a stress cone, which serves as an insulating portion of a prefabricated joint shown in FIG. 4, was extruded. More specifically, as shown in FIG. 4, the material used to form a stress cone 33 in the connecting portion of conductors 32 of the cable 31, was extruded. In this figure, reference numeral 34 denotes an epoxy insulating portion which constitutes the insulating unit along with the stress cone 33.

The extruder used here was of the type in which the diameter of the cylinder was 30mm$\phi$, and L/D = 12. Further, the screen assembly 16 had the structure in which the screen mesh 16a having a size of through-hole of 300 mesh (diameter of through-hole: 45 $\mu$m) and made of a wire having an outer diameter of 40 $\mu$m and having a composition listed in TABLE 1 below, and the reinforcement screen mesh 16b (100 mesh), the mesh 16c (30 mesh), the mesh 16d (12 mesh) and the mesh 16e (30 mesh), which have through-hole diameters of 12 mesh (hole diameter: 1380 $\mu$m), 30 mesh (hole diameter: 560 $\mu$m) and 100 mesh (hole diameter: 150 $\mu$m) which were made of stainless steel wires having outer diameters of 750 $\mu$m, 290 $\mu$m and 100 $\mu$m respectively, were set into the recess 15a of the breaker plate 15 in the order shown in FIG. 2.

The extrusion material, used here was a compound containing 50 weight% of ethylene/propylene rubber (EPR), 49 weight% of clay and 1 weight% of carbon black. The extrusion conditions were: an extrusion temperature (cylinder temperature) of 130°C and the extrusion amount was that obtained for 10 hours at a rate of 3 kg/hour.

The condition of the screen 16a after the extrusion was observed for several cases as in Embodiment 1. The results were summarized in TABLE 3 below. In similar to the case of embodiment 1, as comparative examples, the same extrusion was carried out with regard to screen assemblies where stainless steel was used to make a screen mesh 16a, and the results were also summarized in TABLE 3 below.

7

EP 0 664 200 A1

TABLE 3

|  | No. | EPR |
|---|---|---|
| Examples | 1 | 1.3 $\mu$m |
|  | 2 | 2.0 $\mu$m |
|  | 3 | 1.6 $\mu$m |
|  | 4 | 1.8 $\mu$m |
|  | 5 | 1.2 $\mu$m |
|  | 6 | 1.1 $\mu$m |
|  | 7 | 1.6 $\mu$m |
|  | 8 | 2.0 $\mu$m |
|  | 9 | 1.5 $\mu$m |
| Comparative Examples | 10 | BROKEN SECTION OBSERVED |
|  | 11 | 15.0 $\mu$m |

* In the case of a broken section, the declining amount in terms of wire diameter is regarded as 45 $\mu$m or more.

As is clear from TABLE 3, with regard to the screen mesh of the present invention, the wear of the screen mesh wire caused by the filler or the like and the breakage of wire caused by the pressure applied thereto while the extrusion material is allowed to pass do not occur and therefore fine foreign matters in the extrusion material could be removed invariably for a long time even in the case where the size of the through-hole is very small such as 300 mesh, and a rubber material is extruded.

In contrast, the screen mesh made of a stainless steel wire exhibited an increased through-hole diameter as a result of the breakage of the wire caused by the pressure applied thereto while the extrusion material is allowed to pass through, and/or the abrasion caused by the carbon black or the white filler. As a result, the removal of foreign matters, which is the object of the present invention, could not be sufficiently achieved.

In the above embodiments, LDPE, EVA and EPR were used as extrusion materials; however the present invention can be applied to any material with which the mixture of minute foreign matters should be avoided.

As described above, the extrusion screen mesh of the present invention is made of a wire of Ni-Ti alloy having a specific composition. With this structure, the present invention can achieve high mechanical properties, a high anti-corrosion property and a high anti-erosion property, and a small outer diameter of a wire, and therefore minute foreign matters included in an extrusion material can be removed invariably for a long time even in the case where the size of the through-holes is small.

Further, with the extrusion method of the present invention, the extrusion is carried out with the above screen, and therefore a mold product which is free of foreign matters and is durable under a high voltage. In particular, when the present invention is applied to the manufacture of a power cable, a long-length and stable high-quality cable can be obtained. Therefore, the present invention can contribute to, for example, the extension of a long-distance underground high voltage line.

## Claims

1. A screen mesh used for extrusion, provided in an extruder, for eliminating a foreign matter included in an extrusion material as being extruded, characterized in that the screen mesh is made of a wire of an Ni-Ti alloy.

2. A screen mesh according to claim 1, wherein the Ni-Ti alloy contains at least one element selected from the group consisting of Fe, Co, Cr, V, Cu, Pd, Mn and Al.

8

3.  A screen mesh according to claim 2, wherein a content of said at least one element selected from the group consisting of Fe, Co, Cr, V, Cu, Pd, Mn and Al is 1.8 atomic% or less.

4.  A screen mesh according to claim 1 or 2, wherein an Ni content of the Ni-Ti alloy is in a range of 48.0 to 51.5 atomic%.

5.  A screen mesh according to claim 1 or 2, wherein the Ni-Ti alloy contains 50.6 to 51.5 atomic% of Ni, and the remainder is substantially Ti.

6.  A screen mesh according to claim 1, wherein said extrusion material contains a rubber, plastic or a mixture thereof.

7.  A screen mesh according to claim 6, wherein said rubber is an ethylene-propylene copolymer rubber, an ethylene-propylene-diene copolymer rubber or a compound containing a mixture thereof.

8.  A screen assembly provided in an extruder, for eliminating a foreign matter included in an extrusion material as being extruded, characterized in that the screen assembly comprises a first screen made of a wire of a Ni-Ti alloy and at least one second screen made of stainless steel.

9.  A screen assembly according to claim 8, wherein the Ni-Ti alloy contains at least one element selected from the group consisting of Fe, Co, Cr, V, Cu, Pd, Mn and Al.

10. A screen assembly according to claim 9, wherein a content of said at least one element selected from the group consisting of Fe, Co, Cr, V, Cu, Pd, Mn and Al is 1.8 atomic% or less.

11. A screen assembly according to claim 8 or 9, wherein an Ni content of the Ni-Ti alloy is in a range of 48.0 to 51.5 atomic%.

12. A screen assembly according to claim 8, wherein the Ni-Ti alloy contains 50.6 to 51.5 atomic% of Ni, and the rest is substantially Ti.

13. An extrusion method of extruding an extrusion material, characterized by using an extruder having a screen mesh made of a wire of an Ni-Ti alloy in front of an extrusion screw in regard to an extruding direction.

14. An extrusion method according to claim 13, wherein the Ni-Ti alloy contains at least one element selected from the group consisting of Fe, Co, Cr, V, Cu, Pd, Mn and Al.

15. An extrusion method according to claim 14, wherein a content of said at least one element selected from the group consisting of Fe, Co, Cr, V, Cu, Pd, Mn and Al is 1.8 atomic% or less.

16. An extrusion method according to claim 13 or 14, wherein an Ni content of the Ni-Ti alloy is in a range of 48.0 to 51.5 atomic%.

17. An extrusion method according to claim 13, wherein the Ni-Ti alloy contains 50.6 to 51.5 atomic% of Ni, and the rest is substantially Ti.

18. An extrusion method according to claim 13, wherein the screen mesh is reinforced by at least one second screen made of stainless steel.

19. An extrusion method according to claim 13, wherein a material for a semiconductive layer or a material for an insulating layer, of a rubber/plastic insulating power cable, is used as the extrusion material.

20. An extrusion method according to claim 13, wherein the extrusion material contains an ethylene-propylene copolymer rubber, an ethylene-propylene-diene copolymer rubber or a mixture thereof.

21. An extrusion method according to claim 13, wherein the extrusion material contains polyethylene, polypropylene, chlorinated polyethylene, an ethylene-vinylacetate copolymer, an ethylene-acrylic ethyl copolymer, or a mixture thereof.

EXTRUDING
DIRECTION

F I G. 1

F I G. 2

F I G. 3

F I G. 4

# INTERNATIONAL SEARCH REPORT

International application No.

PCT/JP94/00896

## A. CLASSIFICATION OF SUBJECT MATTER

Int. Cl$^5$ B29C47/68

According to International Patent Classification (IPC) or to both national classification and IPC

## B. FIELDS SEARCHED

Minimum documentation searched (classification system followed by classification symbols)

Int. Cl$^5$ B29C47/68, C22C14/00, C22C19/03

Documentation searched other than minimum documentation to the extent that such documents are included in the fields searched

| | |
|---|---|
| Jitsuyo Shinan Koho | 1926 - 1994 |
| Kokai Jitsuyo Shinan Koho | 1971 - 1994 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP, A, 57-165912 (GK Technologies, Inc.), October 13, 1982 (13. 10. 82), Claim, (Family: none) | 1-21 |
| Y | JP, B1, 44-1073 (The Furukawa Electric Co., Ltd.), January 18, 1969 (18. 01. 69), Line 19, left column to line 12, right column, page 1, (Family: none) | 1-21 |
| Y | JP, Y2, 59-40198 (Mitsubishi Monsanto Chemical Co.), November 13, 1984 (13. 11. 84), Claim, Figs. 1 to 2, (Family: none) | 8-12, 18 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 6, 1994 (06. 07. 94) | August 30, 1994 (30. 08. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)